Europäisches Patentamt

European Patent Office

Office européen des brevets

(11) Numéro de publication: **0 215 176**
**A1**

## DEMANDE DE BREVET EUROPEEN

(21) Numéro de dépôt: 85401779.5

(22) Date de dépôt: 13.09.85

(51) Int. Cl.⁴: **G01C 21/00** , **G01C 21/12** , **G01S 13/78**

(43) Date de publication de la demande:
**25.03.87 Bulletin 87/13**

(84) Etats contractants désignés:
**DE GB IT**

(71) Demandeur: **THOMSON-CSF**
**173, Boulevard Haussmann**
**F-75379 Paris Cedex 08(FR)**

(72) Inventeur: **Marcy, Raymond**
**THOMSON-CSF SCPI 173, bld. Haussmann**
**F-75379 Paris Cedex 08(FR)**

(74) Mandataire: **Benoît, Monique et al**
**THOMSON-CSF SCPI 19, avenue de Messine**
**F-75008 Paris(FR)**

(54) **Procédé radio-électrique de mesure de distance, navigateur gyroscopique mettant en oeuvre un tel procédé, et utilisation de ce procédé pour la désignation d'objectif entre deux véhicules.**

(57) La présente invention concerne un procédé radio-électrique de mesure de la distance parcourue par un véhicule et un navigateur gyroscopique mettant en oeuvre un tel procédé.

Le système interrogateur (11) du véhicule mesure, au cours d'un cyle de mesure, le temps $2.\Delta T$ mis par une onde pour couvrir la distance $2.D_i$ aller et retour le séparant d'une balise 10 fixée au point de départ du véhicule. Un calculateur 12 calcule la distance $D_i$ correspondante. A partir de cette distance $D_i$, ainsi que des coordonnées précédentes $\Delta X_{i-1}$, $\Delta Y_{i-1}$ et de l'orientation $\phi_i$ du véhicule fournies respectivement par un calculateur de bord à partir de la longueur $(d_i)$ délivrée par le calculateur 12 et de l'orientation $\phi_{i-1}$ de cette longueur $(d_{i-1})$ pour le cycle de mesure précédent et par un conservateur de cap, le calculateur 12 déduit la longueur $(d_i)$ dela corde sous-tendant la trajectoire élémentaire parcourue par le véhicule depuis sa précédente position de coordonnées $\Delta X_{i-1}$, $Y_{i-1}$.

Application à la désignation d'objectif entre véhicules non en vue directe.

FIG_2

## PROCEDE RADIO-ELECTRIQUE DE MESURE DE DISTANCE, NAVIGATEUR GYROSCOPIQUE METTANT EN OEUVRE UN TEL PROCEDE ET UTILISATION DE CE PROCEDE POUR LA DESIGNATION D'OBJECTIF ENTRE DEUX VEHICULES

La présente invention concerne un procédé radio-électrique de mesure de distance, un navigateur gyroscopique mettant en oeuvre un tel procédé et l'application de ce procédé à la désignation d'objectif entre deux véhicules.

Pour mesurer une distance parcourue par un véhicule on utilise généralement un odomètre, appareil basé sur le principe du comptage des tours de roue faits par le véhicule pour couvrir le trajet. Connaissant le diamètre de la roue, on en déduit la distance parcourue. Une telle mesure manque évidemment de précision, étant donné en particulier l'incertitude existant sur la mesure du diamètre : en effet, en plus des erreurs de mesure, il se produit au cours du trajet, par exemple une dilatation progressive des pneus qui entache la mesure d'erreurs ; en outre, le patinage des roues peut provoquer des erreurs importantes.

La précision obtenue peut être suffisante dans certaines applications. Elle ne l'est pas dans d'autres comme par exemple dans le cas d'un navigateur gyroscopique, qui détermine en permanence les coordonnées d'un véhicule par rapport à un système d'axes orientés par rapport à une référence angulaire, qui peut être le Nord géographique.

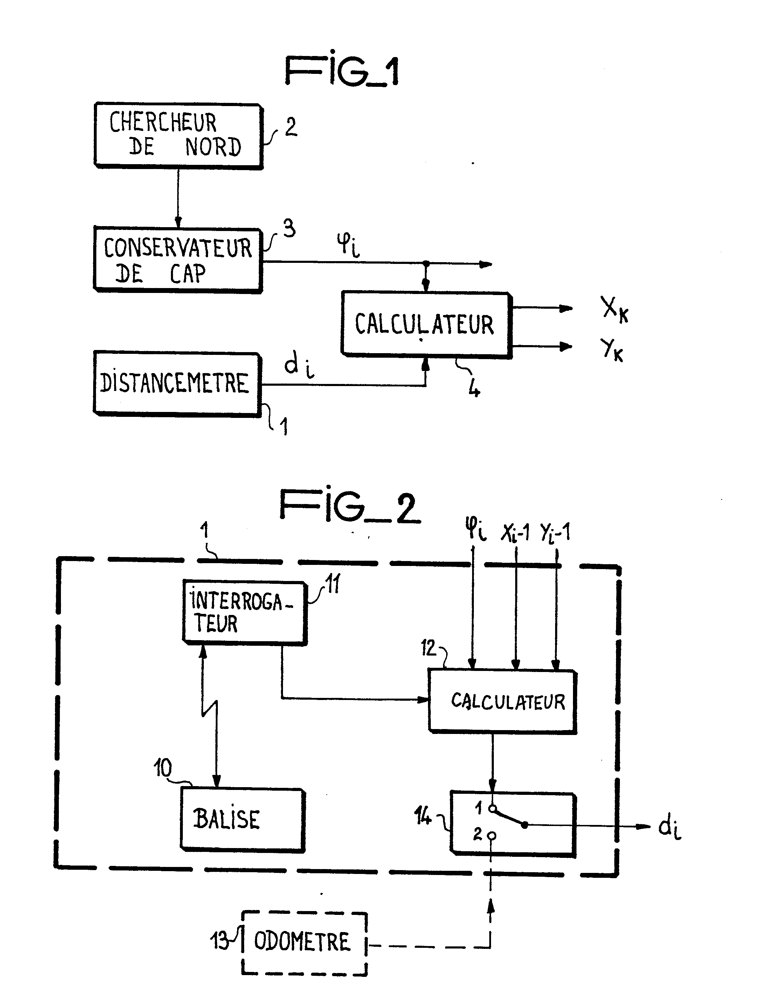

Le schéma de principe d'un tel navigateur gyroscopique est représenté par la figure 1 : un calculateur 4 reçoit en permanence, fournies par un distancemètre 1 c'est-à-dire conventionnellement par un odomètre, les longueurs respectives $d_i$ de $\underline{n}$ segments élémentaires constituant la trajectoire du véhicule porteur du navigateur gyroscopique, entre deux points $B_1$ et $B_2$. Il reçoit également, fournie par un conservateur de cap 3, l'orientation $\phi_i$ respective des segments élémentaires de trajectoire par rapport à une référence angulaire, Nord géographique par exemple; le conservateur de cap 3 est, à l'origine $B_1$ de la trajectoire, calé sur la direction de la référence angulaire (en général le Nord géographique) fournie par un dispositif 2 tel qu'un chercheur de Nord.

Le calculateur 4 détermine en permanence les coordonnées $X_K$ et $Y_K$ du véhicule dans la position correspondant à l'extrémité du segment d'ordre $\underline{K}$ par rapport à l'origine $B_1$, dans un système d'axes $B_1 XY$ dont l'un, $B_1 Y$ par exemple, est orienté par rapport à la référence angulaire choisie (Nord géographique). Ces coordonnées sont données par les expressions :

$$X_K = \sum_{i=1}^{K} d_i . \sin \varphi_i \quad (1)$$

$$Y_K = \sum_{i=1}^{K} d_i . \cos \varphi_i \quad (2)$$

Dans un tel système, l'erreur avec laquelle l'orientation $\phi_i$ de l'axe de déplacement du véhicule est mesurée par le conservateur de cap 3 est très faible. Mais l'erreur avec laquelle la distance $d_i$ est mesurée par l'odomètre est importante et représente la principale cause de l'incertitude avec laquelle la position relative du véhicule est définie par rapport à l'origine $B_1$ ; cette dernière erreur est de l'ordre de 0,5% de la distance parcourue.

Le procédé radio-électrique de mesure de distance selon l'invention permet d'une part de connaître avec une meilleure précision la longueur de la trajectoire du véhicule porteur, et d'autre part de connaître à tout instant les coordonnées du véhicule par rapport à l'origine de la trajectoire - ($B_1$) et par rapport à un système d'axes dont l'un est orienté selon le Nord géographique, le Nord magnétique ou toute autre référence angulaire extérieure.

Le procédé de mesure de distance selon l'invention est, pour chaque cycle de mesure, basé sur la localisation radio-électrique du véhicule en mouvement par rapport à une balise fixée au point de départ de la trajectoire; cette localisation est suivie du calcul de la distance séparant la position du véhicule de la position qu'il occupait au cycle de mesure précédent, puis du calcul des coordonnées du véhicule.

Le procédé selon l'invention est plus précisément défini par la revendication 1.

L'invention a également pour objet un navigateur gyroscopique utilisant ce procédé tel que défini par la revendication 3 et une utilisation du procédé à la désignation d'objectif entre deux véhicules, définie par la revendication 6.

La présente invention sera mieux comprise à la lecture de la description détaillée faite ci-après avec référence aux figures ci-annexées, qui représentent :

-Fig. 1, déjà décrite précédemment, le - schéma de principe d'un navigateur gyroscopique ;

-Fig. 2, le schéma d'un distancemètre fonctionnant selon le procédé de l'invention ;

-Fig. 3, un schéma explicatif de la mesure de distance selon l'invention ; et

- Fig. 4, une application du navigateur gyroscopique selon l'invention à un système d'armes.

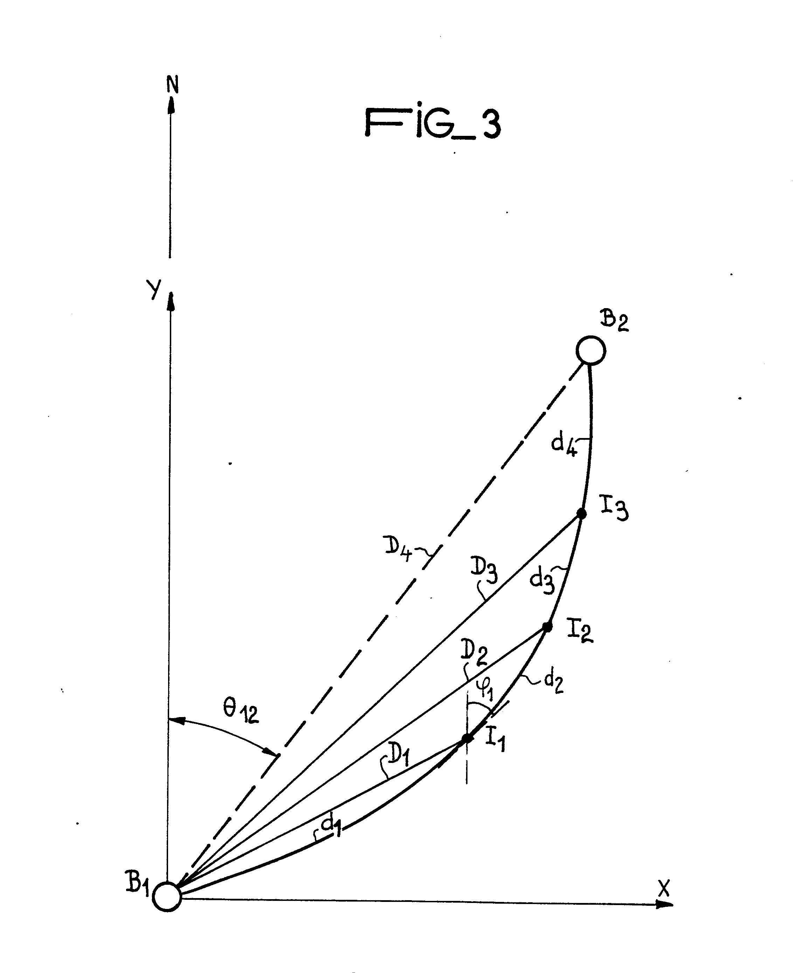

La figure 2 représente le schéma d'un distancemètre fonctionnant selon le procédé de mesure de l'invention, utilisable dans le navigateur gyroscopique de la figure 1 et décrit à l'aide de la figure 3.

Dans la suite de la description, pour simplifier l'exposé, la référence angulaire extérieure est choisie comme étant le Nord géographique N.

Soit un véhicule allant du point $B_1$ au point $B_2$ selon une trajectoire quelconque $B_1$ -$I_1$ -$I_2$ -$I_3$ -$B_2$.

Le distancemètre 1 selon l'invention comprend un interrogateur 11, embarqué à bord du véhicule et par conséquent mobile, une balise 10 qui sera déposée par le véhicule au point de départ $B_1$ de sa trajectoire et avec laquelle le véhicule restera en liaison en permanente, et un calculateur 12 également embarqué.

Ce calculateur 12 reçoit un signal $2.\Delta T$ fourni par l'interrogateur 11, reçoit le signal $\phi_i$ fourni par le conservateur de cap 3 de la figure 1 et les signaux $X_{i-1}$ et $Y_{i-1}$, composantes de la position occupée par le véhicule lors d'une précédente phase de calcul, les indices 0, 1, 2, 3, 4 (i = 1,2,3,4,5) correspondant respectivement aux positions $B_1$, $I_1$, $I_2$, $I_3$, $B_2$ du véhicule sur la figure 3.

Il est possible que des problèmes, tels que le relief géographique de la région, interrompent la liaison établie entre la balise fixe 10 et l'interrogateur 11 mobile au cours de la trajectoire du véhicule. Afin de ne pas interrompre le fonctionnement du dispositif dans un tel cas, un odomètre 13 peut être malgré tout prévu qui donne une mesure, même entachée d'erreur, un inverseur 14 délivrant à l'entrée du calculateur 4 de la figure 1

la distance $d_i$, mesurée par le distancemètre 10, 11, 12 selon l'invention lorsque la liaison interrogateur 11/balise 10 est établie (position 1 de l'inverseur 14) ou bien mesurée par l'odomètre "de secours" 13 (position 2 de l'inverseur 14) lorsque cette liaison est coupée.

Le dispositif de la figure 2 fonctionne de la façon suivante :

Après avoir déposé la balise 10 en $B_1$, le véhicule entame sa trajectoire $B_1$ -$I_1$-...-$I_{i-1}$-$I_i$-...-$I_{n-1}$-$B_2$. Son système de bord 11 interroge en permanence, suivant un rythme de mesure déterminé, la balise 10 en émettant un signal haute fréquence. Ce signal parvient après un temps $\Delta T$ à la balise 10 en $B_1$ qui, après un temps de réponse connu, émet à son tour un signal, reçu après un nouvel intervalle de temps $\Delta T$ par l'interrogateur de bord 11. L'intervalle de temps qui sépare l'émission et la réception d'un signal par le système interrogateur 11 fournit la durée totale $2.\Delta T$ des trajets parcourus par les signaux émis, puisque l'on suppose connu le temps de réponse de la balise. La distance $D_i$ séparant la balise 10 en $B_1$ de l'interrogateur de bord 11 en position $I_i$ est donc définie par :

$$2 D_i = c.2.\Delta T,$$

$\underline{c}$ désignant la vitesse de la lumière ; de cette expression, on déduit $D_i$, ainsi calculée par le calculateur 12. On aura donc, dans l'exemple de la figure 3, quatre cycles de mesure donnant successivement les distances mesurées $D_1$, $D_2$, $D_3$, $D_4$ de la balise 10 en $B_1$ à l'interrogateur de bord 11 lorsque le véhicule est en position $I_1$, $I_2$, $I_3$, $B_2$ respectivement.

Comme indiqué précédemment, pour calculer les coordonnées $X_i$ et $Y_i$ du véhicule en $I_i$, il est nécessaire de disposer d'une mesure représentant la longueur de la trajectoire élémentaire parcourue par le véhicule entre deux points successifs $I_{i-1}$ et $I_i$. La longueur de cette trajectoire élémentaire est égale, à une erreur $\delta d_i$ près, à la longueur $d_i$ de la corde $I_{i-1}I_i$ sous-tendant cette trajectoire élémentaire. L'erreur $\delta d_i$ étant bien entendu d'autant plus faible que la distance $I_{i-1}I$ est plus courte. L'orientation $\phi_i$ de la corde $I_{i-1}I_i$ , par rapport au Nord géographique $\vec{N}$ est fournie par le conservateur de cap 3. Or ce n'est pas la longueur $d_i$ des cordes $I_{i-1} I_i$ qui est obtenue précédemment mais la distance $D_i$ séparant le véhicule, porteur de l'interrogateur 11, de la balise 10 restée fixe au point de départ $B_1$ de la trajectoire. On démontre que la longueur $d_i$ de la corde $I_{i-1}I$ s'exprime en fonction de la distance $D_i$ entre la balise 10 en $B_1$ et l'interrogateur 11 dans sa position $I_i$, de l'orientation angulaire $\phi_i$ de la corde $I_{i-1}I$ et des coordonnées $X_{i-1}$ et $Y_{i-1}$ de la position $I_{i-1}$ :

$$d_i = \sqrt{D_i^2 - (X_{i-1} \cdot \cos\varphi_i - Y_{i-1} \cdot \sin\varphi_i)^2} - (Y_{i-1} \cdot \cos\varphi_i + X_{i-1} \cdot \sin\varphi_i)$$

Ce calculateur est opéré par le calculateur 12 pour chaque ensemble de valeurs $D_i$, $\phi_i$, $X_{i-1}$ et $Y_{i-1}$ qu'il calcule ou qu'il reçoit. Le calcul des coordonnées du point $I_i$ est alors effectué en utilisant les formules (1) et (2) ci-dessus, par un calculateur tel que le calculateur 4 de la figure 1. Il est à noter que, dans la pratique, les calculateurs 12 et 4 peuvent être confondus.

On démontre également que l'erreur avec laquelle la distance totale $\Sigma_{i=1}^{n} d_i$ parcourue par le véhicule entre $B_1$ et $B_2$ est voisine de l'erreur avec laquelle la dernière distance $D_n$ ($D_4$ sur la figure 3) est mesurée par le système d'interrogation, si l'écart $\Delta\phi_i = \phi_i - \phi_{i-1}$ est inférieur à une valeur limite $\Delta\phi_{max}$. Si on a $\Delta\phi_i < \Delta\phi_{max}$, l'erreur de mesure de la distance parcourue qui est produite par le distancemètre 1 est supérieure à celle qui est fournie par l'odomètre 13. Dans ce cas, l'inverseur 14 est placé sur la position 2 afin d'utiliser les mesures faites par l'odomètre 13. Par contre, si on a $\Delta\phi_i > \Delta\phi_{max}$, l'erreur de mesure produite par le distancemètre 1 est inférieure à celle qui est fournie par l'odomètre 13. Dans ce cas l'inverseur 14 est placé sur la position 1, afin d'utiliser les mesures faites par le distancemètre 1.

Il est donc possible de localiser le point $B_2$ d'arrivée avec une très grande précision, même sans vue directe entre $B_1$ et $B_2$, le calculateur 4 fournissant, par rapport à $B_1$ et au système d'axes $B,X,Y$ orienté suivant le Nord géographique, les coordonnées $X_n$ et $Y_n$ de $B_2$ en utilisant les expressions (1) et (2) mentionnées plus haut, à savoir :

$$X_n = \sum_{i=1}^{n} d_i \cdot \sin\varphi_i \qquad (3)$$

$$Y_n = \sum_{i=1}^{n} d_i \cdot \cos\varphi_i \qquad (4)$$

Il est à noter, à titre de vérification, que la distance $D_n$ séparant $B_1$ et $B_2$ est donnée par :

$$D_n = \sqrt{(X_n)^2 + (Y_n)^2} \qquad (5)$$

ce qui permet d'obtenir l'orientation $\theta_{12}$ du segment $B_1B_2$ par rapport à l'axe $B_1Y$, lui-même dirigé selon le Nord géographique $\vec{N}$, qui est donnée par l'expression :

$$\theta_{12} = \text{arc tg} \left(\frac{X_n}{Y_n}\right) \quad (6)$$

Enfin, la longueur totale de la trajectoire du véhicule entre $B_1$ et $B_2$ est considérée comme étant égale à la somme des longueurs $d_i$ des cordes sous-tendant les éléments de trajectoire.

En utilisant le procédé de l'invention, à partir d'un point $B_1$ connu, on peut donc à tout moment - (en pratique, à chaque point $I_i$) localiser précisément un point par la distance qui le sépare de $B_1$ ($D_i$) et l'orientation de cette distance par rapport à une référence angulaire (Nord géographique).

Une des principales applications du navigateur gyroscopique utilisant le procédé de mesure de distance selon l'invention est la désignation d'objectif entre véhicules non en vue directe et placés en des points quelconques non prévus, donc aux coordonnées inconnues, dans le cas où des véhicules détecte une cible dont les coordonnées doivent être transmises à une rampe de lancement portée par l'autre véhicule, par exemple.

Pour cela il est nécessaire de connaître les positions relatives des véhicules et les orientations de la ligne de foi des véhicules par rapport à une référence angulaire commune.

On rappelle que la ligne de foi d'un véhicule est une ligne servant de repère, qui est constituée ici selon un exemple non-limitatif par l'axe radio-életrique de l'antenne du radar portée par le véhicule. Le rayonnement est donc maximum dans sa direction : toute orientation angulaire du véhicule se fera par rapport à cette ligne de foi.

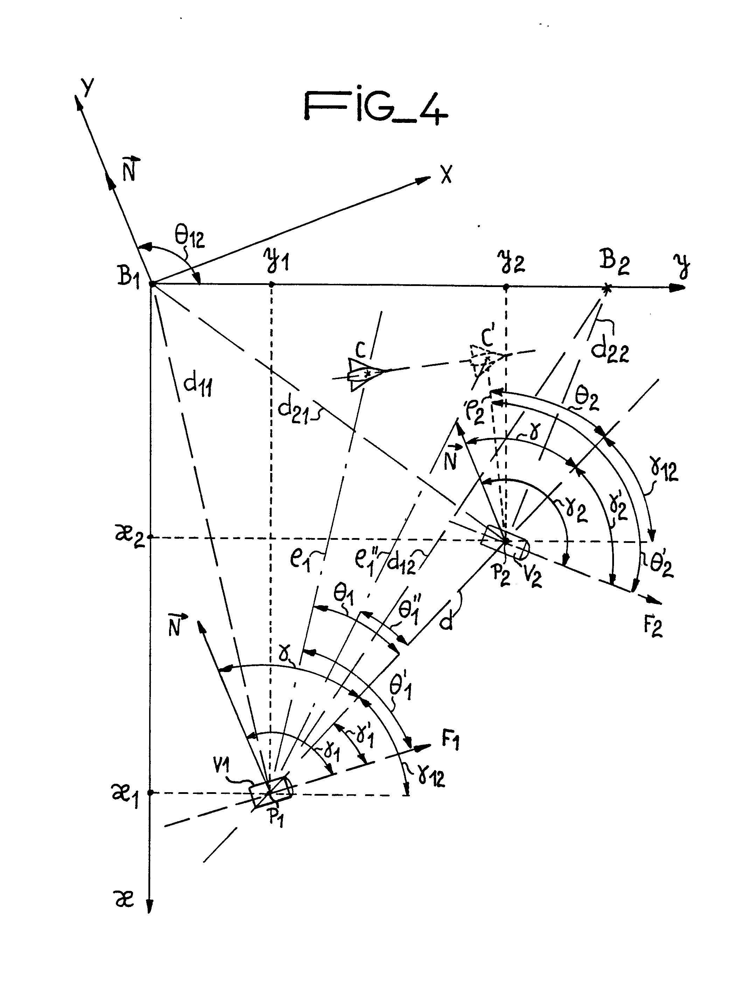

Les différentes étapes de la transmission au deuxième véhicule des coordonnées de la cible détectée par le premier véhicule sont les suivantes, en utilisant les notations illustrées par la figure 4. La référence angulaire commune est ici le Nord géographique dont la direction est indiquée par le vecteur $\vec{N}$. La transmission se fait en deux temps.

Il y a d'abord la mise en place d'un nouveau référentiel, dit référentiel auxiliaire $B_1 x y$, obtenu par rotation de $\theta_{12}$ du référentiel commun $B_1 X Y$ orienté selon le Nord géographique N. Cette mise en place est réalisée par un véhicule non représenté, qui conformément à la description précédente du navigateur gyrosco pique selon l'invention, dépose en $B_1$ une première balise, suit une trajectoire quelconque non représentée pour aboutir en $B_2$ où il dépose une deuxième balise et qui est situé à la distance notée $D_{12}$ (donnée par l'expression (5) précédente) de $B_1$, l'angle $\theta_{12}$ existant entre le segment joignant les deux balises $B_1 B_2$ et le Nord géographique $\vec{N}$ étant donné par la relation (6) précédente. Le référentiel auxiliaire $B_1 x y$ est choisi tel que $B_1 y$ soit orienté selon la droite $B_1 B_2$ joignant les balises, avec $B_1$ comme origine. La deuxième balise $B_2$ a donc pour coordonnées $(O, + D_{12})$ dans le référentiel auxiliaire.

Soit un premier véhicule $V_1$ placé en un point $P_1$ de coordonnées $x_1$ et $y_1$ dans le référentiel auxiliaire. Ce premier véhicule, supposé détecter une cible située en C à une distance $\rho_1$ de la position $P_1$, possède une ligne de foi $F_1$ faisant un angle $\gamma_1$ avec le vecteur $\vec{N}$ de Nord géographique et $\theta'_1$ avec la droite joignant $P_1$ à la cible en C.

Soit un deuxième véhicule $V_2$ placé en un point $P_2$ de coordonnées $x_2$ et $y_2$ dans le référentiel auxiliaire. Ce véhicule, supposé porter une rampe de lancement et par conséquent tirer sur la cible qui, au moment du tir, occupe une nouvelle position C' située à une distance $\rho_2$ du deuxième véhicule, possède une ligne de foi $F_2$. Cette ligne de foi $F_2$ fait un angle $\gamma_2$ avec la direction du Nord géographique $\vec{N}$ et un angle $\theta'_2$ avec la droite $P_2 C'$. Soit $\underline{d}$ la longueur du segment $P_1 P_2$. Le segment $P_1 P_2$ est orienté selon un angle $\gamma$ par rapport

au Nord géographique $\vec{N}$ et fait :

-un angle $\gamma'_1$ avec la ligne de foi $F_1$ du véhicule $V_1$ ;

-un angle $\gamma'_2$ avec la ligne de foi $F_2$ du véhicule $V_2$ ;

-un angle $\theta_1$ avec le segment $P_1 C$ ;

-un angle $\theta_2$ avec le segment $P_2 C'$ ;

-un angle $\theta''_1$ avec la droite joignant la position $P_1$ du premier véhicule $V_1$ à la position C' (située à une distance $\rho''_1$ de $P_1$) de la cible au moment du tir ; et enfin

-un angle $\gamma_{12}$ avec la direction du segment $B_1 B_2$ joignant les deux balises.

On suppose que les deux véhicules $V_1$ et $V_2$ sont équipés d'un dispositif de localisation radio-électrique qui se réfère à la base $B_1 B_2$, cette base étant établie sur le principe décrit plus haut en référence aux figures 2 et 3, c'est-à-dire par exemple à l'aide d'un navigateur gyroscopique selon l'invention. Pour localiser les véhicules $V_1$ et $V_2$ dans le référentiel auxiliaire $B_1 xy$, l'interrogateur de chaque véhicule émet un signal, reçu par les balises en $B_1$ et $B_2$, les balises en $B_1$ et $B_2$ émettant à leur tour un signal reçu par les interrogateurs des véhicules $V_1$ et $V_2$. Comme on l'a déjà mentionné, ce dispositif de localisation permet de connaître la distance séparant le véhicule de la balise répondeuse. Dans le cas de la figure 4, on obtient donc respectivement la distance $d_{11}$ séparant le véhicule $V_1$ en $P_1$ de la première balise en $B_1$, la distance $d_{12}$ séparant le véhicule $V_1$ en $P_1$ de la deuxième balise en $B_2$, la distance $d_{21}$ séparant le véhicule $V_2$ en $P_2$ de la première balise en $B_1$ et la distance $d_{22}$ séparant le véhicule $V_2$ en $P_2$ de la deuxième balise en $B_2$.

Pour que la transmission des coordonnées polaires $\rho_1$, $\theta'_1$ de la cible détectée en C, ces coordonnées étant obtenus par le radar de bord du premier véhicule $V_1$ par rapport à sa ligne de foi $F_1$ (donc dans son propre référentiel), s'effectue vers le deuxième véhicule $V_2$ en tenant compte du changement de position de la cible de C en C' pendant la transmission, et ceci dans le propre référentiel du deuxième véhicule $V_2$, (donc par rapport à sa ligne de foi $F_2$), il est nécessaire de réaliser les opérations suivantes :

1) Calculer (dans le référentiel auxiliaire $B_1 x y$) les coordonnées $x_1$, $y_1$ et $x_2$, $y_2$ des positions $P_1$ et $P_2$ respectivement ;

2) Calculer la distance

$$d = \sqrt{(x_2 - x_1)^2 + (y_2 - y_1)^2}$$

entre les points $P_1$ et $P_2$, ainsi que l'orientation

$$\gamma_{12} = \text{arc tg} \left( \frac{x_2 - x_1}{y_2 - y_1} \right)$$

du segment $P_1P_2$ par rapport à la direction $B_1B_2$ définie par les deux balises (donc dans le référentiel auxiliaire) ;

3) En déduire l'orientation $\gamma = \theta_{12} - \gamma_{12}$ de la droite $P_1P_2$, servant d'axe de référence commun, par rapport à la direction $\overrightarrow{N}$ du Nord géographique ;

4) Mesurer, par rapport à la direction $\overrightarrow{N}$, les orientations $\gamma_1$ et $\gamma_2$ des lignes de foi $F_1$ et $F_2$ des deux véhicules $V_1$ et $V_2$ respectivement. Ces orientations sont fournies facilement par le chercheur de Nord des navigateurs gyroscopiques ;

5) En déduire les orientations $\gamma'_1$ et $\gamma'_2$ respectives des lignes de foi $F_1$ et $F_2$ par rapport à l'axe de référence commun $P_1P_2$ :

$$\gamma'_1 = \gamma_1 - \gamma$$

$$\gamma'_2 = \gamma_2 - \gamma$$

6) En déduire les coordonnées polaires $\rho_1$, $\theta_1$ de la cible en position C par rapport à la position $P_1$ du premier véhicule $V_1$, et à l'axe de référence commun $P_1P_2$ :

$$\theta_1 = \theta'_1 - \gamma'_1$$

7) Prévoir la position C' et calculer les coordonnées polaires $\rho''_1$, $\theta''_1$ de la cible, en position C' au moment du tir par le véhicule $V_2$, ces coordonnées étant rapportées au premier véhicule $V_1$ en position $P_1$, et à l'axe de référence commun $P_1P_2$. Cette position C' est extrapolée à partir de la position C, en tenant compte de la trajectoire et de la vitesse de la cible, ainsi que du temps nécessaire aux calculs et à la transmission des coordonnées au deuxième véhicule ;

8) Calculer les coordonnées polaires $\rho_2$, $\theta_2$ de la cible dans sa deuxième position C' par rapport au deuxième véhicule $V_2$ dans sa position $P_2$ et à l'axe de référence commun $P_1P_2$. Ces coordonnées sont obtenues par les formules suivantes :

$$\rho_2 = \sqrt{d^2 + \rho''^2_1 - 2d \cdot \rho''_1 \cdot \cos \theta'_1}$$

$$\theta_2 = \pi - \text{arc cos} \frac{d^2 + \rho^2_2 - \rho''^2_1}{2d \cdot \rho_2}$$

qu'on peut démontrer facilement dans le triangle $P_1$ C' $P_2$ ;

9) Calculer les coordonnées polaires $\rho_2$, $\theta'_2$ de la cible dans sa deuxième position C' par rapport au véhicule $V_2$ dans sa position $P_2$ et à son propre référentiel, c'est-à-dire par rappot à sa ligne de foi $F_2$, avec :

$$\theta'_2 = \theta_2 + \gamma'_2$$

On a donc décrit une application d'un navigateur gyroscopique selon l'invention, application dans laquelle les coordonnées polaires d'une cible détectée par un premier véhicule $(V_1)$ sont transmises à un deuxième véhicule $(V_2)$, portant une rampe de lancement par exemple, les deux véhicules étant placés en des points non préparés, donc dont les coordonnées sont inconnues, cela étant réalisé grâce à la présence de deux balises ($B_1$ et $B_2$), la position de la deuxième balise étant déduite selon l'invention de celle de la première balise.

Plus généralement, selon l'invention, il est ainsi possible de localiser un ou plusieurs véhicules par rapport à deux balises fixes, et donc entre eux. Dans le cas où les véhicules sont susceptibles de se déplacer sur de grandes distances, il est possible de prévoir un jeu de quatre balises mobiles, permettant de disposer à chaque instant de deux balises fixes dont les positions sont parfaitement connues.

Dans ce dernier cas, chacune des balises est installée sur un véhicule comportant en outre un navigateur gyroscopique, deux au moins de ces navigateurs étant réalisés selon l'invention. Soient $v_1$, $v_2$, $v_3$ et $v_4$ les véhicules, équipés par exemple comme suit :

-les véhicules $v_1$ et $v_3$ comportent chacun une balise qui joueront (successivement) le rôle de la balise $B_1$ décrite plus haut, et un navigateur gyroscopique qui peut être classique ;

-les véhicules $v_2$ et $v_4$ comportent chacun une balise qui joueront (successivement) le rôle de la balise $B_2$ et un navigateur gyroscopique selon l'invention.

La procédure est alors la suivante :

-à l'origine, les quatre véhicules $v_1$-$v_4$ sont groupés,

- dans une première étape, le véhicule $v_1$ reste à la position d'origine et les trois autres véhicules se déplacent jusqu'à un point où est mise en place la balise $B_2$ portée par le véhicule $v_2$ : on dispose alors de deux balises fixes $B_1$ et $B_2$ précisément repérées, permettant la localisation de véhicules V (tels que les véhicules $V_1$ ou $V_2$ de la figure 4),

- dans une deuxième étape, en prévision d'une progression future des véhicules V, le véhicule $v_3$ reste avec le véhicule $v_2$ alors que le véhicule $v_4$ se déplace vers un point où sera mise en place une future balise de type $B_2$. Lors de ce déplacement, le véhicule $v_4$ se réfère au véhicule $v_3$. Lorsqu'il est parvenu à destination, il constitue avec le véhicule $v_3$ une nouvelle base de deux balises fixes $B_1$ et $B_2$ précisément repérées, permettant la localisation des véhicules V,

-dans une troisième étape, les véhicules $v_1$ et $v_2$ se déplacent respectivement vers le véhicule $v_4$ et vers un point où sera mise en place une balise $B_2$. Dans son déplacement, le véhicule $v_2$ se réfère au véhicule $v_4$. Lorsque les deux véhicules $v_1$ et $v_2$ sont parvenus à destination, on dispose à nouveau d'une base de deux balises fixes $B_1$ et $B_2$ pour la localisation des véhicules V.

Le même processus peut se reproduire ainsi autant que nécessaire, sans qu'aucun véhicule V ait à être en vue directe avec aucun autre.

Il est à noter que l'utilisation de quatre véhicules-balises (v) permet d'avoir des bases de balises $B_1$-$B_2$ qui se succèdent mais qui sont indépendantes les unes des autres, ce qui évite toute accumulation d'erreurs lors de l'établissement des bases successives.

**Revendications**

1. Procédé radio-électrique de mesure de la longueur d'une trajectoire parcourue par un véhicule porteur d'un système d'interrogation, caractérisé par le fait que la trajectoire est décomposée en $n$ éléments de trajectoire et qu'à l'extrémité de chacun des éléments, il comporte les étapes suivantes, après le dépôt d'une balise à l'origine ($B_1$) de la trajectoire du véhicule :

-mesure par le système d'interrogation (11) du temps ($\Delta T$) mis par une onde pour parcourir la distance ($D_i$) séparant le véhicule de la balise ($B_i$) ;

-calcul de la distance ($D_i$) séparant le véhicule de la balise ;

-calcul de la longueur ($d_i$) de la corde sous-tendant l'élément de trajectoire, à partir des coordonnées - ($X_{i-1}$, $Y_{i-1}$) du véhicule à l'extrémité de l'élément précédent, ces coordonnées étant exprimées dans un système d'axes qui a la balise pour origine et dont l'un des axes est orienté selon une référence angulaire extérieure ($\vec{N}$), et de l'orientation ($\phi_i$), par rapport à ladite référence extérieure ($\vec{N}$), de ladite corde ;

la longueur de la trajectoire étant donnée par l'addition des longueurs des cordes sous-tendant les éléments de trajectoire.

2. Procédé radio-électrique de mesure de distance selon la revendication 1, caractérisé par le fait que la référence angulaire extérieure ($\vec{N}$) est le Nord géographique.

3. Navigateur gyroscopique mettant en oeuvre le procédé selon l'une des revendications 1 et 2, caractérisé par le fait que, destiné à équiper un véhicule dont il délivre les coordonnées à l'extrémité de chacun des éléments de trajectoire, ces coordonnées définissant la position du véhicule en mouvement dans un système d'axes ayant pour origine le point de départ ($B_1$) du véhicule et un de ses axes (B,Y) orienté selon la référence angulaire extérieure ($\vec{N}$), il comporte :

-des premiers moyens (2) fournissant la direction de la référence angulaire extérieure ($\vec{N}$) à l'entrée de

-deuxièmes moyens (3) fournissant un signal représentatif de l'orientation ($\phi_i$) d'un élément de la trajectoire suivie par le véhicule par rapport à la référence angulaire extérieure ($\vec{N}$) ;

-des troisièmes moyens (1) fournissant une mesure ($d_i$) de la longueur d'un élément de trajectoire, comportant un distancemètre radio-électrique comprenant :

-une balise fixe (10) au point de départ ($B_i$) du véhicule ;

-un dispositif interrogateur (11) émettant un signal haute fréquence en direction de la balise fixe (10), recevant le signal renvoyé par ladite balise (10) et délivrant un signal représentant l'intervalle de temps $\Delta T$ mis par ledit signal pour parcourir la distance ($D_i$) séparant le véhicule de la balise (10) ;

- des moyens de calcul (12) qui reçoivent les signaux de sortie ($2.\Delta T$) du dispositif interrogateur -

(11) et les signaux de sortie ($\phi_i$) des deuxièmes moyens (3), ainsi que le signal de sortie ($X_{i-1}$, $Y_{i-1}$) de quatrièmes moyens (4) relatif à l'élément de trajectoire précédent, et qui calculent la longueur - ($d_i$) de la corde sous-tendant l'élément de trajectoire considéré;

-les quatrièmes moyens (4) calculant, à partir de la longueur de la corde ($d_i$) soutendant l'élément de trajectoire et de l'orientation ($\phi_i$) de l'élément de trajectoire, les coordonnées ($X_i$, $Y_i$) du véhicule à l'extrémité ($l_i$) de l'élément de trajectoire considéré.

4. Navigateur gyroscopique selon la revendication 3, caractérisé en ce que les moyens de calcul (12) opérant les calculs suivants :

-calcul de la distance $D_i$ séparant le véhicule de la balise fixe (10) telle que $D_i = c.\Delta T$, $c$ étant la vitesse de la lumière ;

-à partir de la distance $D_i$, du signal de sortie ($\phi_i$) des deuxièmes moyens(3)et des signaux de sortie-($X_{i-1}$, $Y_{i-1}$)des quatrièmes moyens (4), calcul de la longueur ($d_i$) de la corde en utilisant la formule :

$$d_i = \sqrt{D_i^2 - (X_{i-1}.\cos\varphi_i - Y_{i-1}.\sin\varphi_i)^2} - (Y_{i-1}.\cos\varphi_i + X_{i-1}.\sin\varphi_i).$$

5. Navigateur gyroscopique selon l'une des revendications 3 et 4, caractérisé par le fait que la référence angulaire commune ($\vec{N}$) est le Nord géographique.

6. procédé de désignation d'objectif entre véhicules, caractérisé par le fait qu'il comporte les étapes suivantes :

.-mise en place d'une première et d'une deuxième balise en deux points quelconques ($B_1$ et $B_2$) dont on peut connaître, par rapport à la référence angulaire commune ($\vec{N}$), les coordonnées et, à l'aide du procédé de mesure de distance selon l'une quelconque des revendications 1 et 2, la longueur - ($D_{12}$)et l'orientation ($\theta_{12}$) du segment les joignant ($B_1B_2$) et servant d'axe de référence commun ;

-mise en place d'un premier et d'un deuxième véhicule ($V_1$, $V_2$) dont on mesure l'orientation ($\gamma_1$, $\gamma_2$) des lignes de foi respectives par rapport à la référence angulaire commune ($\vec{N}$) ;

-détection, en une première position (C), d'un objectif par le premier véhicule ($V_1$) et mesure de sa distance ($_1$) et de son orientation ($\theta'_1$) par rapport à la ligne de foi dudit premier véhicule ;

-mesure des distances respectives ($d_{11}$, $d_{12}$ et $d_{21}$, $d_{22}$) des premier et deuxième véhicules ($V_1$, $V_2$) aux première et deuxième balises et calcul, dans le système d'axes qui a pour origine la première balise et dont un des axes est constitué par l'axe de référence commun, des coordonnées ($x_1$, $y_1$ et $x_2$, $y_2$) des véhicules, de la longueur (d) et de l'orientation ($\gamma_{12}$) du segment qui sépare les deux véhicules, qui constitue un deuxième axe de référence commun ;

-calcul, par rapport à la référence angulaire commune ($\vec{N}$) de l'orientation ($\gamma$) du deuxième axe de référence commun ;

-calcul par rapport au deuxième axe de référence commun de l'orientation respective ($\gamma'_1$, $\gamma'_2$) de la ligne de foi de chacun des véhicules ;

-calcul de l'orientation ($\theta_1$) de la cible, dans sa première position (C), par rapport au deuxième axe de référence commun ;

- calcul des coordonnées polaires ($\rho''_1$, $\theta''_1$) de la cible dans une deuxième position (C') qu'elle occupera au moment de la réception par le deuxième véhicule des informations transmises par le premier, par rapport au premier véhicule ($V_1$) et au deuxième axe de référence commun ;

-calcul desdites coordonnées polaires ($\rho_2$, $\theta_2$) de la cible dans sa deuxième position (C'), par rapport au deuxième véhicule ($V_2$) et au deuxième axe de référence commun ; et

-calcul des coordonnées polaires ( $\rho_2$, $\theta'_2$) de la cible dans sa deuxième position (C') par rapport au deuxième véhicule ($V_2$) et par rapport à la ligne de foi dudit véhicule.

7. Procédé de désignation d'objectif selon la revendication 6, caractérisé par le fait qu'un premier et un deuxième véhicules portant chacun une balise du type première balise ($B_1$) et un navigateur gyroscopique et un troisième et un quatrième véhicules portant chacun une balise du type deuxième balise ($B_2$) et un navigateur gyroscopique selon l'une des revendications 3 à 5, il comporte les étapes suivantes :

-mise en place des quatre véhicules sensiblement en un même point, le premier véhicule y demeurant et constituant la première balise ($B_1$) ;

-déplacement des trois derniers véhicules vers un point quelconque où le deuxième véhicule demeure pour constituer la deuxième balise ($B_2$), les deux derniers véhicules étant alors localisables par rapport aux deux premiers ;

-déplacement du dernier véhicule vers un autre point quelconque où il constitue la deuxième balise ($B_2$) qui, coopérant avec le troisième véhicule constituant la première balise ($B_1$), permet de localiser les deux premiers véhicules.

## FIG_1

CHERCHEUR DE NORD 2

CONSERVATEUR DE CAP 3 $\varphi_i$

DISTANCEMETRE $d_i$ 1

CALCULATEUR $X_k$ $Y_k$ 4

## FIG_2

$\varphi_i$  $X_{i-1}$  $Y_{i-1}$

1

INTERROGA- TEUR 11

BALISE 10

CALCULATEUR 12

14  1  2  $d_i$

13 ODOMETRE

FiG_3

FIG_4

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| A | DE-A-1 791 190 (TELEFUNKEN)<br>* Revendication 1 *<br><br>--- | 1-6 | G 01 C 21/00<br>G 01 C 21/12<br>G 01 S 13/78 |
| A | US-A-3 097 357 (R. DURNAL)<br>* En entier *<br><br>--- | 1-5 | |
| A | FR-A-2 327 516 (BODENSEEWERK GERÄTETECHNIK)<br>* Page 4, lignes 29-37 *<br><br>--- | 3-5 | |
| A | US-A-3 739 383 (PEROT et al.)<br><br>----- | | |

DOMAINES TECHNIQUES
RECHERCHES (Int. Cl.4)

G 01 C
G 01 S

Le présent rapport de recherche a été etabli pour toutes les revendications

| Lieu de la recherche<br>LA HAYE | Date d'achèvement de la recherche<br>14-05-1986 | Examinateur<br>DE BUYZER H.J. |
|---|---|---|